# EUROPÄISCHE PATENTSCHRIFT

(11) **EP 2 109 207 B1**
(45) Veröffentlichungstag und Bekanntmachung des Hinweises auf die Patenterteilung: **29.07.2020**
(21) Anmeldenummer: 09005174.9
(22) Anmeldetag: 08.04.2009
(51) Int. Cl.: H02K 3/24, H02K 9/06, H02K 9/08, H02K 9/19, H02K 9/16

(54) **Flüssigkeitsgekühlte elektrische Maschine sowie Verfahren zur Kühlung einer solchen elektrischen Maschine**
Liquid cooled electric machine and process for cooling an electric machine
Machine électrique refroidi par un liquide et procédé correspondant

(30) Priorität: 09.04.2008 DE 102008018064; 05.05.2008 DE 102008022105
(43) Veröffentlichungstag der Anmeldung: 14.10.2009
(73) Patentinhaber: Liebherr-Components Biberach GmbH, 88400 Biberach/Riß (DE)
(72) Erfinder: Graner, Klaus, 88524 Uttenweiler-Ahlen (DE); Lis, Johann, 88499 Riedingen (DE)
(74) Vertreter: Thoma, Michael

(56) Entgegenhaltungen:
- WO-A1-98/54819
- WO-A1-2007/113024
- WO-A1-2008/006934
- WO-A1-2008/031804
- WO-A2-2008/022108
- DE-A1- 2 836 903
- DE-A1- 10 117 071
- DE-A1- 19 648 455
- DE-B- 1 024 161

## Beschreibung

Die virliegende Erfindung betrifft eine elektrisch Maschine gemaß Oberbegrilldes anspruchs 1.

Bestimmte Bauarten von elektrischen Maschinen werden in der Regel durch eine Oberflächenkühlung oder Durchzugskühlung mit Fremd- oder Eigenbelüftung gekühlt. Maschinen mittlerer Leistung, die in Anlagen mit kleinem Einbauraum verbaut werden oder in Bereichen zum Einsatz kommen, wo die erwärmte Kühlluft des Motors unerwünscht ist, sowie Traktionsmaschinen, die bei beengten Platzverhältnissen verbaut werden, erfordern Hochleistungskühlungen. Hierbei kommen verschiedene Kühlvarianten zum Einsatz.

Entweder kann eine Mantelkühlung des Statorblechs mit einer Kühlflüssigkeit wie beispielsweise Öl oder Wasser erfolgen oder eine direkte Ölkühlung der Statorwicklung mit einem Trennzylinder für den Rotor Verwendung finden. Besonders für die Wickelköpfe kann eine Ölsprühkühlung vorgesehen sein. Hierbei sind Ausführungen bekannt, in denen die Kühlflüssigkeit durch eine vom Maschinengehäuse gebildete zylindrische Flüssigkeitskammer oder eine Rohrschlange geführt wird, die im Gehäuse eingegossen oder im Statorblechpaket verbaut ist. Ferner sind auch Lösungen bekannt, bei denen die Kühlrohrschlange in ein Kunststoffgehäuse eingegossen ist, das nicht nur das Ständerblechpaket umschließt, sondern auch die Wickelköpfe.

Das Problem bei einer Mantelkühlung besteht dabei darin, dass der Rotor und die Wickelköpfe praktisch ungekühlt bleiben. Die Temperatur der inneren Kühlluft erhöht sich, wodurch die Leistungsfähigkeit der Maschine eingeschränkt wird.

Eine Abhilfe bezüglich der Erwärmung der Wickelköpfe ist in der DE 31 35 223 vorgeschlagen, die eine besondere Ausgestaltung der Wickelkopfkühlung vorsieht. Hierbei sind ringförmige Röhren unmittelbar im Wickelkopf zwischen zwei Schichten eingebettet. In ähnlicher Weise sieht die GB 947652 vor, Kühlrohre im Wickelkopf einzubetten und diese direkt in das Gießharz der Statorwicklung einzugießen. Hierdurch wird der Kontakt zwischen Kühlrohr und Wicklung verbessert und ein guter Wärmeübergang erzielt. Allerdings ist das Kühlrohr aus Kunststoffmaterial ausgeführt, was die Wärmeleitung wiederum erheblich einschränkt. Problematisch bleibt bei diesen in den Wickelkopf eingebetteten Kühlrohren, dass der Rotor selbst mehr oder minder ungekühlt bleibt.

In der DE 18 13 190 ist weiterhin eine elektrische Maschine der eingangs genannten Art beschrieben, die zusätzlich zu einer in den Statormantel eingebetteten Kühlrohrschlange eine Wickelkopfkühlung mit einem Innenluftstrom realisiert. Dieser Innenluftstrom wird durch einen auf der Motorwelle sitzenden Ventilator erzeugt und über Freiräume im Maschinengehäuse über die in den Statormantel eingebettete Kühlrohrschlange geführt. Um den Innenluftstrom jedoch derart über die Statorkühlschlangen führen zu können und mit dem Flüssigkühlsystem effektiv zu koppeln, wird um die elektrische Maschine ein zusätzliches Mantelgehäuse mit Luftführungskanälen montiert, so dass das Maschinengehäuse sozusagen zweischalig wird. Dies wirkt sich jedoch negativ auf den Durchmesser und das Gewicht des Motors aus.

WO 98/548 19 A1 offenbart eine elehtrische Maschie gemaß dem Oberbegrilldes Anspruchs 1.

Hiervon ausgehend liegt der vorliegenden Erfindung die Aufgabe zugrunde, eine verbesserte flüssigkeitsgekühlte elektrische Maschine der eingangs genannten Art zu schaffen, die Nachteile des Standes der Technik vermeiden und Letzteren in vorteilhafter Weise weiterbilden. Insbesondere soll bei einer intensiven Kühlung des Statorblechpakets einer elektrischen Maschine mit einer Mantelflüssigkeitkühlung ein hohes Maß an Rotor- und Wickelkopfkühlung mit einem Platz sparenden Aufbau erreicht werden.

WO 98/548 19 A1 offenbart eine gemäß dem Oberbegrilldes Anspruchs 1.

Diese Aufgabe wird erfindungsgemäß durch eine elektrische Maschine gemäß Anspruch 1 gelöst. Bevorzugte Ausgestaltungen der Erfindung sind Gegenstand der abhängigen Ansprüche.

Es wird also vorgeschlagen, den Innenluftstrom unmittelbar im oder am Wickelkopfraum an die Flüssigkeitskühlung anzukoppeln und hierdurch abzukühlen, so dass die Kühlluft nicht aufwändig außen um die Statormantelkühlung herum geführt werden muss. Die Flüssigkeitskühlung wird hierzu in den Wickelraum hineingeführt bzw. unmittelbar an diesen herangeführt. Erfindungsgemäß ist vorgesehen, dass die Kühlrohrschlangen außerhalb der Wickelköpfe durch die Wickelkopfräume geführt sind und der Lüfter zwei jeweils einem Wickelkopfraum zugeordnete Lüfterräder zur Erzeugung eines innerhalb eines jeden Wickelkopfraums zirkulierenden Luftstroms aufweist, der mittels Luftkanal- und/oder -leitmitteln in dem jeweiligen Wickelraum über die freiliegenden Kühlrohrschlangen und durch die Wickelköpfe hindurch zirkulierend geführt ist. Durch das Herunterkühlen der zirkulierenden Innenluft unmittelbar im bzw. am Wickelkopfraum kann eine höchst effiziente Kühlung des Wickelkopfraums erreicht werden, ohne eine kompakte Bauweise opfern zu müssen. Dies kann bei gleichzeitig einfacher Ausbildung und Fertigung des Wickelkopfes erreicht werden, da ein Einbetten der Kühlrohrschlangen in den Wickelkopf nicht erforderlich ist.

Die genannten Kühlluftkanal- und/oder -leitmittel können grundsätzlich verschieden ausgebildet sein. In Weiterbildung der Erfindung sind sie derart beschaffen, dass die Kühlluft am Hals des Wickelkopfes, also am Übergang zwischen Wickelkopf und Statorblechen, durch den Wickelkopf hindurchtritt und um den Wickelkopf herum zirkuliert, wobei der durch den Wickelkopf hindurchtretende Luftstrom zwischen der Wickelkopfaußenseite und dem Gehäuse hindurch, um die Stirnseite des Wickelkopfes herum auf die Innenseite des Wickelkopfes oder umgekehrt um den Wickelkopf herum strömt.

Erfindemgsgemäß unfassen die Luftkanal- und/oder -leitmittel am Hals des Wickelkopfs angeordnete, schlitzförmige Durchgangsausnehmungen im Wickelkopf, die über den Umfang des Wickelkopfes verteilt sind. Diese Durchgangsausnehmungen im Wickelkopf können durch verschiedene Mittel erzielt werden, die die Wicklungslitzen am Hals des Wickelkopfs auseinander halten oder auseinander spreizen. Beispielsweise könnten hülsenförmige Spreizelemente zwischen den aus den Statorblechen heraustretenden Litzenbündeln vorgesehen sein. In Weiterbildung der Erfindung können auch andere Trennmittel vorzugsweise in Form von Schlingen oder Bändern vorgesehen sein, die die Wicklungslitzen bündeln und die gewünschten schlitzförmigen Durchgangsausnehmungen freihalten.

Erfindungsgemäß sind zusätzlich zu den genannten sich radial durch den Wickelkopf erstreckenden Durchgangsausnehmungen auch in Längsrichtung etwa axial durch den Wickelkopf gehende Kühlluftausnehmungen vorgesehen, die mit den zuvor beschriebenen radialen Durchgangsausnehmungen kommunizieren. Hierdurch kann eine verbesserte Kühlung auch im Stirnbereich des Wickelkopfes erzielt werden.

In Weiterbildung der Erfindung definieren die Luftkanal- und/oder -leitmittel für die Kühlluft eine Vielzahl von ringförmig um die Wickelköpfe herumführende Strömungswege, die durch die genannten Durchgangsausnehmungen herum jeweils ringförmig um ein jeweiliges Segment des Wickelkopfes, in dem eine jeweilige Durchgangsausnehmung ausgebildet ist, ringförmig herumführen. Die genannten Strömungswege führen dabei jeweils radial durch eine Durchgangsausnehmung, sodann axial zwischen dem Wickelkopf und dem Maschinengehäuse am Wickelkopf entlang, sodann radial um einen stirnseitigen Wickelkopfabschnitt herum und axial auf einer Wickelkopfinnenseite zurück zur Durchgangsausnehmung, wobei die Strömungsrichtung ggf. auch umgekehrt orientiert sein kann.

Erfindungsgemäß die Kühlrohrschlangen an den Stirnseiten der Wickelköpfe in eniem dest jeweils vorgesbheren Spalt wischen den Stimseiten der Wichelhöpfe med Lageschilden angeordnet. Hierdurch kann ein hoher Wärmeübergang von der Kühlluft in die Kühlrohrschlangen hinein bei gleichzeitig kompakter Bauweise erzielt werden.

In vorteilhafter Weiterbildung der Erfindung sind dabei die Kühlrohrschlangen mit Kühlrippen versehen, die die Wärmeübergangsfläche erhöhen und hierdurch die Kühlleistung beträchtlich verbessern. Insbesondere können die Kühlrohrschlangen nach Art von Strangpressprofilen mit sternförmig angeordneten Axialrippen versehen sein. Alternativ können auch Querrippen oder wendelförmige Kühlrippen vorgesehen sein.

Erfindungsgemäß bilden die auf gegenüberliegenden Seiten angeordneten Wickelkopfräume jeweils geschlossene Luftzirkulationsräume, die hinsichtlich der Luftzirkulation voneinander getrennt ausgebildet sind, so dass keine Kühlluft von einer Stirnseite der Maschine axial auf die andere Stirnseite geführt wird, sondern auf jeder Maschinenstirnseite eine separate Luftzirkulation in dem jeweiligen Wickelkopfraum erfolgt. Hierdurch kann eine einerseits einfache und andererseits sehr kompakte Bauweise erzielt werden.

Um eine stärkere Kühlung des Rotors zu erzielen, kann die Kühlluft auch in den Rotor hinein geführt werden. Insbesondere kann hierzu vorgesehen sein, dass die Wickelkopfräume an sich zwar geschlossene, d.h. mit der Außenumgebung der Maschine nicht kommunizierende Luftzirkulationsräume bilden, jedoch miteinander über zumindest einen Luftkanal verbunden sind, der sich axial durch den Rotor hindurch erstreckt. Vorteilhafterweise können vier oder mehr axiale Kühlluftausnehmungen durch den Rotor hindurch führen, über die die beiden Wickelkopfräume und die darin zirkulierende Kühlluft miteinander kommunizieren können. Durch derartige Kühlluftausnehmungen im Rotor kann einer verbesserte Kühlung des Rotors erzielt werden, wobei eine im Durchmesser schlanke Ausführung der Maschine beibehalten werden kann, da kein Luftdurchtritt zwischen dem Maschinengehäuse und dem Stator benötigt wird. Das Maschinengehäuse kann spaltfrei auf dem Stator sitzen, so dass eine im Querschnitt schlanke Bauform mit geringem Durchmesser ermöglicht wird.

In vorteilhafter Weiterbildung der Erfindung wird hierbei die Kühlluft im Gegenstrom durch den Rotor hindurchgeführt. Die zuvor genannten Luftkanal- und/oder -leitmittel umfassen vorteilhafterweise eine Gegenstromeinrichtung, die die Kühlluft gegenläufig durch die Kühlluftausnehmungen im Rotor hindurchleitet. Während ein erster Satz von Kühlluftausnehmungen die Kühlluft von einem linken Wickelkopfraum zu einem rechten Wickelkopfraum führt, dient ein zweiter Satz von Kühlluftausnehmungen im Rotor dazu, die Kühlluft gegenläufig von dem rechten Wickelkopfraum in den linken Wickelkopfraum zu führen.

Das gegenläufige Hindurchleiten der Kühlluft durch den Rotor kann vorteilhafterweise durch eine besondere Ausbildung und Anordnung der Lüfterräder erzielt werden. Insbesondere kann hierzu vorgesehen sein, dass die Lüfterräder von unmittelbar auf dem Rotor sitzenden Aufsatzscheiben mit schaufelblattähnlichen Luftfördermitteln und/oder von an den Rotor angeformten, entsprechend schaufelblattartigen Luftfördermitteln gebildet werden, wobei vorteilhafterweise auf jeder Stirnseite des Rotors ein Satz der Kühlluftausnehmungen mit einer Wickelkopfaußenseite und ein anderer Satz der Kühlluftausnehmungen mit der Wickelkopfinnenseite kommuniziert. Hierbei ist vorteilhafterweise auf den beiden Stirnseiten ein Lochversatz vorgesehen, d.h. die Kühlluftausnehmungen, die auf der einen Rotorstirnseite mit der Wickelkopfaußenseite kommunizieren, kommunizieren auf der anderen Rotorstirnseite mit der Wickelkopfinnenseite und umgekehrt.

Insbesondere kann vorgesehen sein, dass die Lüfterräder in Form der zuvor genannten Aufsatzscheiben im Wickelkopfinnenraum aufgenommen sind und einerseits radiale Ableitmittel besitzen, die in die Durchgangsausnehmungen in den Wickelkopf führen, und andererseits Einlasskanäle besitzen, die jeweils mit zumindest einem Kühlluftkanal im Rotor in Strömungsverbindung stehen, wobei die Aufsatzscheiben auf gegenüberliegenden Stirnseiten des Rotors zueinander drehversetzt sind derart, dass die Einlasskanäle der einen Aufsatzscheibe mit einem ersten Satz von Luftkanälen im Rotor kommuniziert und die Einlasskanäle der andere Aufsatzscheibe mit einem zweiten Satz von Luftkanälen im Rotor kommuniziert. Hierdurch wird die Kühlluft gegenläufig durch den Rotor hindurchgeführt, wobei jedes Lüfterrad die Kühlluft radial durch die Durchgangsausnehmungen im Wickelkopf drückt, so dass die Kühlluft um den Wickelkopf herum und über die Kühlrohrschlangen hinweg in den Wickelkopfinnenraum strömt. Durch den dort entstehenden Überdruck wird die Kühlluft durch die über die Einlasskanäle mit dem Wickelkopfinnenraum kommunizierenden axialen Kühlluftausnehmungen im Rotor auf die andere Stirnseite der Maschine geführt, wo sie vom dort vorgesehen Lüfterrad vorzugsweise in Form der Aufsatzscheibe in entsprechender Weise um den Wickelkopf herum geführt und sodann in die jeweils anderen axialen Kühlluftausnehmungen im Rotor gedrückt wird.

Alternativ zu der zuvor beschriebenen Ausbildung mit auf den Rotorstirnseiten sitzenden Aufsatzscheiben können die Lüfterräder auch von den Rotorstirnseiten ein Stück weit beabstandet angeordnet sein, wobei die Lüfterräder vorteilhafterweise trotzdem innerhalb der Wickelköpfe aufgenommen sind, so dass die Lüfterräder sozusagen nicht über die Stirnseiten der Wickelköpfe vorstehen. Der Innenraum der Wickelköpfe wird zur Aufnahme der Lüfterräder genutzt, wodurch eine kurze axiale Bauweise bebehalten werden kann.

Um eine verstärkte Luftzirkulation zu erreichen, kann der Lüfter auch einen zusätzlichen Lüftermotor aufweisen, der vorteilhafterweise auf einer Lagerschildaußenseite angeordnet ist und ein Lüfterrad unabhängig von der Rotordrehzahl antreibt. Vorteilhafterweise sitzt in diesem Fall das von dem Lüftermotor angetriebene Lüfterrad ebenfalls auf der Außenseite des Lagerschilds und somit nicht mehr innerhalb des Wickelkopfs. In Weiterbildung der Erfindung können bei dieser Ausbildung mit separatem Lüftermotor auch die Kühlluftschlangen außerhalb des Lagerschilds sitzen, wobei die Kühlluft durch entsprechende Ausnehmungen im Lagerschild hindurchgeführt ist, um eine Luftzirkulation über die Kühlluftschlangen hinweg zu gewährleisten. Ein Lagerdeckel, der über dem Lagerschild sitzt, kann hierbei eine geschlossen Luftzirkulation sicherstellen. Alternativ oder zusätzlich kann auch der Lagerschild entsprechend ausgebildet sein und den genannten Kühlluftmotor nebst Kühlerrad und/oder die Kühlluftschlangen aufnehmen.

Die Erfindung wird nachfolgend anhand bevorzugter Ausführungsbeispiele und zugehöriger Zeichnungen näher erläutert. In den Zeichnungen zeigen:
- Fig. 1:: einen schematischen Längsschnitt durch eine elektrische Maschine mit Flüssigkeits- und Luftkühlung nach einer vorteilhaften Ausführung der Erfindung, bei der die beiden Wickelkopfräume voneinander separiert sind und die Kühlluft separat in jedem Wickelkopfraum geschlossen zirkuliert wird,
- Fig. 2:: einen Längsschnitt durch eine elektrische Maschine ähnlich Fig. 1 nach einer weiteren vorteilhaften Ausführung der Erfindung, bei der die Kühlluft durch axiale Kühlluftausnehmungen im Rotor gegenläufig von dem einen Wickelkopfraum zum anderen Wickelkopfraum und zurück geführt wird,
- Fig. 3:: einen Längsschnitt durch eine elektrische Maschine ähnlich Fig. 2 nach einer weiteren vorteilhaften Ausführung der Erfindung, bei der der Lüfter einen separaten Lüftermotor mit Lüfterrad außerhalb des Lagerschilds des Motors aufweist,
- Fig. 4:: einen Längsschnitt durch eine elektrische Maschine ähnlich Fig. 3, wobei die Kühlluftschlangen außerhalb des Lagerschilds angeordnet sind,
- Fig. 5:: eine ausschnittsweise, vergrößerte Ansicht der Statorbleche und eines daran anschließenden Wickelkopfs, die die Kühlluftausnehmungen im Wickelkopf zeigen,
- Fig. 6:: eine Draufsicht auf ein als Aufsatzscheibe ausgebildetes Lüfterrad der Maschine nach den Ausführungen der Figuren 2 bis 4, und
- Fig. 7:: einen Axialschnitt durch das als Aufsatzscheibe ausgebildete Lüfterrad aus Fig. 6, der einerseits dessen Schaufelblätter und andererseits dessen Einlasskanäle zum gegenläufigen Durchleiten der Kühlluft durch den Rotor zeigt.

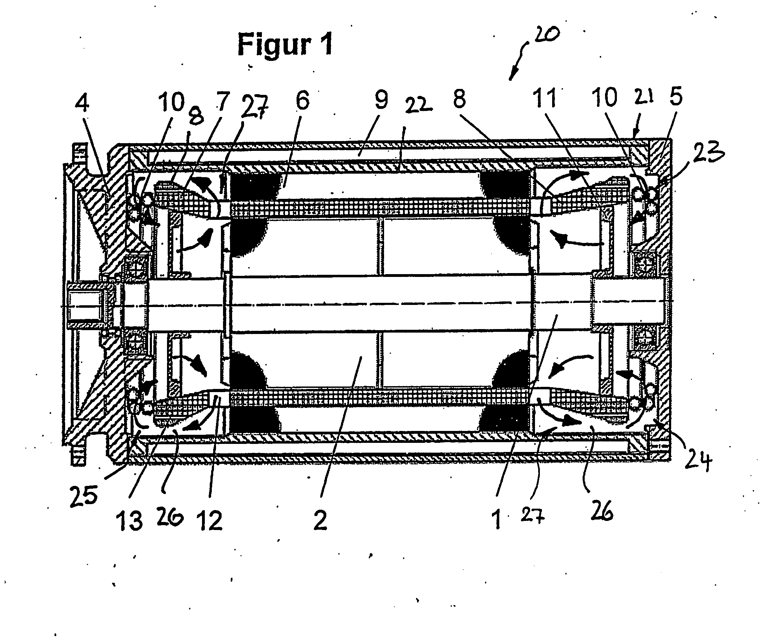

Die in Fig. 1 gezeigte elektrische Maschine 20 umfasst eine Welle 1 mit einem Rotor 2, die drehbar an Lagerschildern 4 und 5 gelagert ist, die Teil eines Maschinengehäuses 21 bilden und/oder einen Mantel 22 stirnseitig verschließen, der den Stator 6 der Maschine 20 umgibt. Der genannte Mantel 22 weist eine Mantelkühlung 9 auf, durch die Kühlflüssigkeit eines Flüssigkeitskühlkreises 23 zirkuliert wird. Der genannte Mantel sitzt dabei spaltfrei, bündig und/oder flächig auf den Statorblechen, um einen guten Wärmeübergang aus dem Stator 6 in den Kühlmantel zu erzielen.

Neben dem genannten Flüssigkühlkreis 23 umfasst die Kühlvorrichtung 24 der elektrischen Maschine 20 eine Luftkühlung 25 zur Kühlung der Wickelköpfe 8, die beiderseits des Stators 6 und des Rotors 2 in die von dem Gehäuse 21, genauer gesagt dem Mantel 22 und den Lagerschildern 4 und 5 begrenzten Wickelkopfräume 26 vorspringen. Wie Fig. 1 zeigt, umfasst der Stator 6 eine Wicklung 7, die im Statorblech des Stators 6 teilweise eingebettet ist und außerhalb des genannten Statorblechs von beiden Seiten korbartige Wickelköpfe 8 bildet.

Um die genannten Wickelköpfe 8 zu kühlen, wird mittels Lüfterrädern 11 in jedem der genannten Wickelkopfräume 26 eine interne Kühlluftzirkulation bewirkt, d.h. es wird keine Umgebungsluft durch die Maschine hindurchgeführt bzw. über die Wickelköpfe 8 geführt, sondern ein interner Kühlluftkreislauf erzeugt, der die genannten Wickelköpfe 8 kühlt. Um der Kühlluft die Wärme zu entziehen, sind, wie Fig. 1 zeigt, in den Wickelkopfräumen 26 Kühlrohrschlangen 10 vorgesehen, durch die Kühlflüssigkeit zirkuliert wird. Der durch die genannten Kühlrohrschlangen 10 geführte Flüssigkühlkreis kann grundsätzlich separat von dem Flüssigkühlkreis 23 der Mantelkühlung 22 ausgebildet sein. Vorteilhafterweise jedoch kann eine Ankopplung der Kühlrohrschlangen 10 an den Flüssigkühlkreis 23 der Mantelkühlung 22 vorgesehen sein, wobei je nach thermischer Belastung der einzelnen Maschinenteile eine parallele Ankopplung oder auch eine serielle Ankopplung der Kühlrohrschlangen 10 an die Mantelkühlung 22 und den diese speisenden Flüssigkühlkreis 23 vorgesehen sein kann.

Um eine starke Kühlwirkung auf die zirkulierende Kühlluft zu erzielen, sind die genannten Kühlrohrschlangen 10 auf ihrer Außenseite vorteilhafterweise mit einer Verrippung versehen, beispielsweise in Form von mehrere Axialrippen an jedem Kühlrohr, um die Wärmeübergangsfläche der Kühlrohrschlangen zu vergrößern.

In der in Fig. 1 gezeichneten Ausführungsform sitzen die Kühlrohrschlangen 10 im Wesentlichen an der Stirnseite der Wickelköpfe 8 in einem dort vorgesehen Spalt zwischen der Stirnseite der genannten Wickelköpfe 8 und den Lagerschildern 4 bzw. 5, wobei die genannten Kühlrohrschlangen 10 sich im Wesentlichen ringförmig um die Achse der Welle 1 herum erstrecken.

Die Lüfterräder 11, die die Luftzirkulation bewirken, sitzen in der Ausführungsform nach Fig. 1 unmittelbar auf der genannten Welle 1 und werden von dieser angetrieben. Vorteilhafterweise sind hierbei die genannten Lüfterräder 11 im Innenraum der korbförmigen Wickelköpfe 8 aufgenommen, wobei die genannten Lüfterräder 11 in der gezeichneten Ausführung von den Stirnseiten des Rotors 2 ein Stück weit beabstandet sind, vgl. Fig. 1. Die Lüfterräder 11 sind in der gezeichneten Ausführung mit axial wirkenden Schaufelblättern versehen, so dass sie die Luft axial in den ringförmigen Zwischenraum drücken, der um die Welle herum zwischen den Lüfterrädern 11 und den Stirnseiten des Rotors 2 sowie von außen her von den Wickelköpfen 8 begrenzt ist, vgl. Fig. 1.

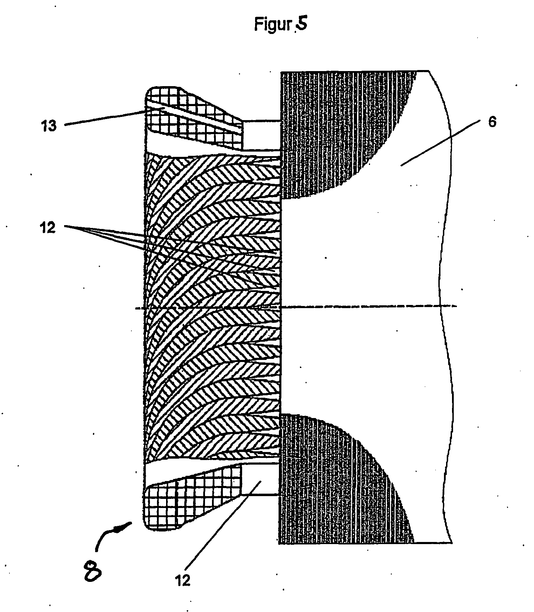

Wie die Figuren 1 und 5 zeigen, sind die Wickelköpfe 8 an ihrem Hals, d.h. im Übergangsbereich zum Statorblech hin mit radialen Durchgangsausnehmungen 12 versehen, die einen Durchtritt der Kühlluft durch die Wickelköpfe 8 hindurch erlauben. Weiterhin sind in den Wickelköpfen 8 sich in Längsrichtung erstreckende Durchgangsausnehmungen 13 vorgesehen, die einerseits mit den genannten radialen Durchgangsausnehmungen 12 kommunizieren und andererseits an der Stirnseite der Wickelköpfe 8 münden, so dass auch in axialer Richtung Kühlluft durch die Wickelköpfe 8 hindurchgeführt werden kann. Wie Fig. 5 zeigt, sind dabei die sich in Längsrichtung erstreckenden Durchgangsausnehmungen 13 im Querschnitt kleiner als die zuvor genannten radialen Durchgangsausnehmungen 12 am Fuß der Wickelköpfe 8. Zur Erzeugung der genannten Durchgangsausnehmungen 12 und 13 können in die Wickelköpfe 8 geeignete Trennmittel beispielsweise in Form von Schlingen und Bändern oder auch Hülsen eingearbeitet sein, um die Wicklungslitzen zu bündeln bzw. auseinander zu halten.

Die genannten Durchgangsausnehmungen 12 bilden einen Teil von Kanal- und -leitmitteln 27, die eine ringförmige Luftzirkulation um die korbförmigen Wickelköpfe 8 herum bewirken, wie dies die Strömungspfeile in Fig. 1 versinnbildlichen. Die von den Lüfterrädern 11 zum Hals des jeweiligen Wickelkopfs 8 hin gedrückte Kühlluft tritt dort durch die genannten Durchgangsausnehmungen 12 und 13 hindurch, wird sodann auf der Außenseite des Wickelkopfes 8 an diesem entlang zwischen Wickelkopf 8 und Mantel 22 hindurch zur Stirnseite des jeweiligen Wickelkopfes 8 und um diese Stirnseite herum zurück auf die Innenseite des Wickelkopfes 8 geleitet. An der Stirnseite des Wickelkopfes 8 streicht die Kühlluft dabei über die Kühlrohrschlangen 10 hinweg, so dass der Kühlluft die Wärme entzogen wird, die ihr zuvor von der Wicklung des Wickelkopfs 8 abgegeben wurde.

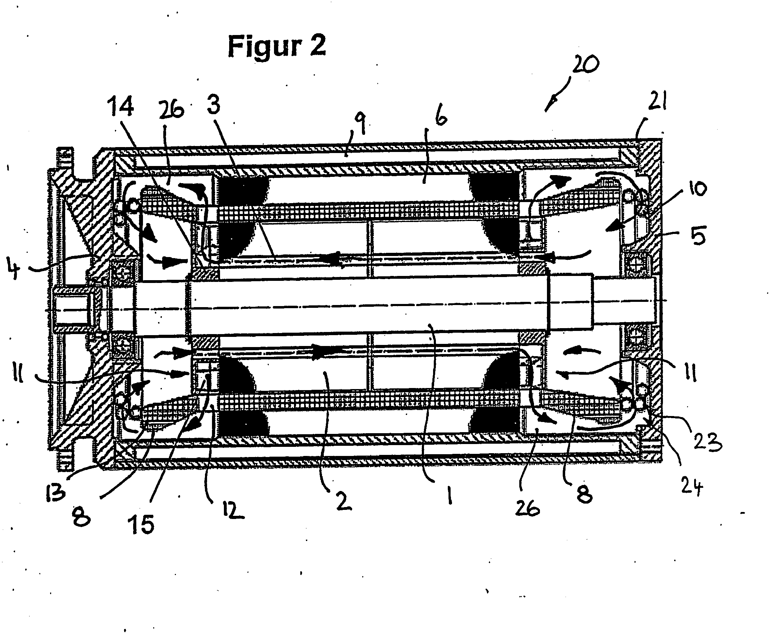

Die in Fig. 2 gezeigte Ausführung der elektrischen Maschine 20 ist grundsätzlich der in Fig. 1 gezeichneten Ausführung ähnlich, so dass für selbe Bauteile dieselben Bezugsziffern vergeben sind und insoweit auf die vorhergehende Beschreibung verwiesen wurde. Im Wesentlichen unterscheidet sich die Ausführung der Fig. 2 von der der Fig. 1 durch die Kühlluftführung, insbesondere Luftkanäle 3 durch den Rotor 2 hindurch von dem einen Wickelkopfraum 26 zu dem anderen Wickelkopfraum auf der gegenüberliegenden Seite und zurück, sowie durch die Ausbildung der Lüfterräder 11.

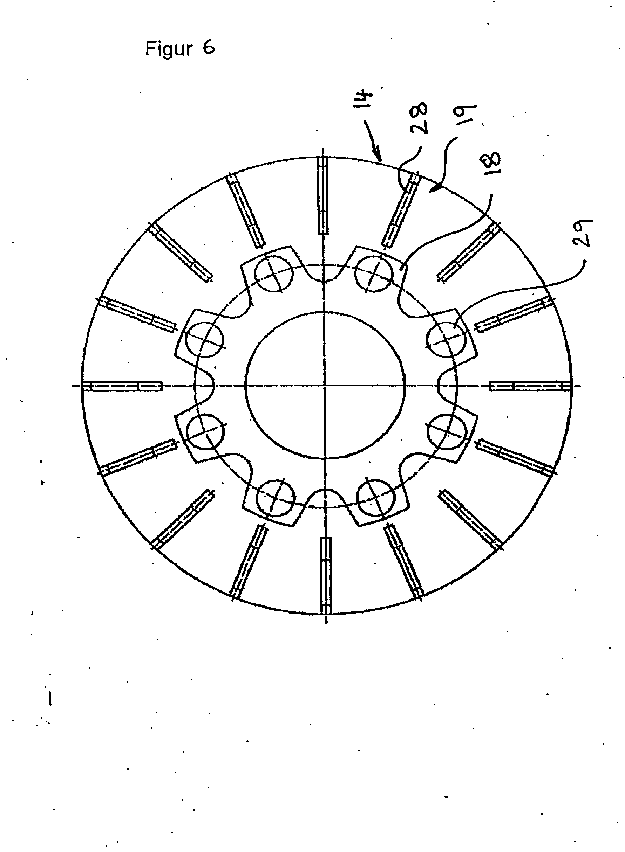

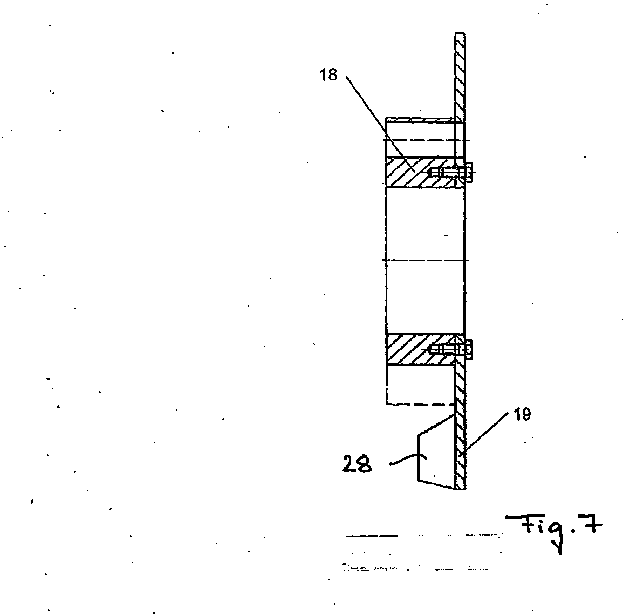

Wie Fig. 2 zeigt, sind die Lüfterräder 11 als Aufsatzscheiben bzw. Anpressscheiben 14 ausgebildet, die unmittelbar auf der Stirnseite des Rotors 2 anliegen und auf der Welle 1 sitzen. Wie die Figuren 6 und 7 zeigen, umfasst dabei jede Aufsatzscheibe 14 einen innen liegenden Scheibenteil 18, der auf der Welle 1 sitzt und stirnseitig auf dem Rotor 2 sitzt, sowie einen mit dem genannten Scheibenteil 18 verbundenen Lüfterteil 19, der im Wesentlichen aus einem radial auskragenden Flansch besteht, an dem geeignete Luftfördermittel beispielsweise in Form von Förderblättern bzw. Förderschaufeln 28 befestigt sind, vgl. Fig. 7.

In dem genannten Scheibenteil 18 sind hierbei axiale Luftkanäle bzw. Luftlöcher 29 ausgebildet, die über den Umfang verteilt sind und mit axialen Kühlluftausnehmungen bzw. Luftkanälen 3 in dem Rotor 2 kommunizieren, die sich in dem genannten Rotor 2 axial hindurch erstrecken und jeweils stirnseitig aus dem genannten Rotor 2 heraustreten. Dabei sind in dem Rotor 2 doppelt so viele Luftkanäle 3 vorgesehen wie in den Aufsatzscheiben 14, so dass jede der Aufsatzscheiben 14 mit seinen Luftlöchern 29 nur mit jedem zweiten Luftkanal 3 im Rotor 2 kommuniziert. Hierbei sind die beiden Aufsatzscheiben 14 rotatorisch zueinander versetzt, so dass ein erster Satz von Luftkanälen 3 im Rotor 2 über die Luftlöcher 29 in der in Fig. 2 linken Aufsatzscheibe 14 mit dem Innenraum des Wickelkopfs 8 kommuniziert, während ein zweiter Satz von Luftkanälen 3 des Rotors 2 über die Luftlöcher 29 der in Fig. 2 rechten Aufsatzscheibe 14 mit dem Innenraum des Wickelkopfs 8 auf der rechten Seite kommuniziert.

Die jeweils nicht in die genannten Luftlöcher 29 im Scheibenteil 18 mündenden Luftkanäle 3 kommunizieren indes mit dem Lüfterteil 19 der Aufsatzscheiben 14, so dass die in Fig. 2 durch die Strömungspfeile versinnbildlichte Kühlluftzirkulation erreicht wird. Diese gestaltet sich wie folgt: Der Lüfterteil 19 der Aufsatzscheiben 14, der radial arbeitet und einen radialen Luftaustritt zum Wickelkopf 8 hin vorsieht, drückt die Kühlluft durch die am Hals der Wickelköpfe 8 vorgesehenen Durchgangsausnehmungen 12 hindurch auf die Außenseite der Wickelköpfe 8. Hierzu sind die genannten Aufsatzscheiben 14 im Bereich des Halses des jeweiligen Wickelkopfes 8 angeordnet, wobei sich die auskragenden Lüfterteile 19 bis zur Innenseite der Wickelköpfe 8 erstrecken und an diesen mit einem geringen Luftspalt anliegen, vgl. Fig. 2. Die durch die Durchgangsausnehmungen 12 hindurchgedrückte Kühlluft zirkuliert sodann ähnlich der in Fig. 1 gezeigten Luftführung um die Wickelköpfe 8 herum, wobei sie auf der Außenseite zwischen dem jeweiligen Wickelkopf 8 und dem Mantel 22 hindurchstreicht, sodann um die Stirnseite des Wickelkopfes 8 herum und über die Kühlrohrschlangen 10 hinweg, von wo sie auf die Innenseite des Wickelkopfes 8 gelangt, vgl. Fig. 2. Von dort wird die Kühlluft in die Luftlöcher 29 der jeweiligen Aufsatzscheibe 14 gedrückt, die insofern Einlasskanäle für die Luftkanäle 3 des Rotors 2 bilden. Die Kühlluft strömt sodann durch die genannten Kühlluftkanäle 3 durch den Rotor 2 hindurch, um auf der anderen Rotorseite auf das Lüfterteil 19 der dort vorgesehenen Aufsatzscheibe 14 zu gelangen. Dort zirkuliert sodann die Kühlluft in entsprechender Weise durch den und um den Wickelkopf 8 herum und sodann gegenläufig durch den Rotor 2 hindurch zurück, so dass im Rotor 8 eine gegenläufige Kühlluftströmung durch die zuvor genannten zwei Sätze von Durchgangsausnehmungen 3 erzeugt wird.

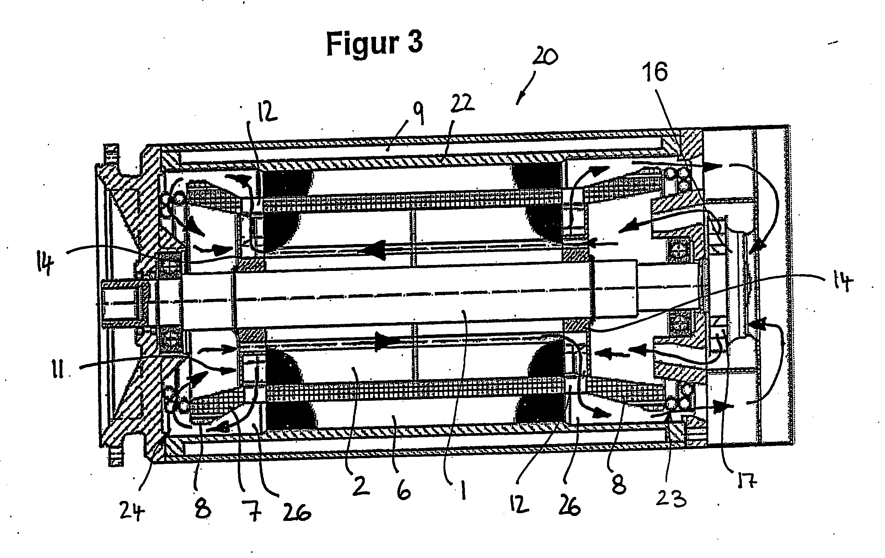

Die in Fig. 3 dargestellte elektrische Maschine weist grundsätzlich einen ähnlichen Aufbau wie die Maschine in Fig. 2 auf, wobei der Unterschied hierzu im Wesentlichen darin besteht, dass die Strömung des Innenluftstroms durch einen Lüftermotor 16 unterstützt wird, der an der Außenseite des Lagerschilds 5 befestigt ist und den Innenluftstrom nach der Kühlrohrwendel 10 der in Fig. 3 rechten Seite in die Luftlöcher 3 des Rotors presst. Dieser Aufbau erlaubt auch im Stillstand eine intensive Kühlung der elektrischen Maschine 20. Wie Fig. 3 zeigt, treibt der Lüftermotor 16 hierbei ein zusätzliches Lüfterrad 17 an, welches auf dem Lüftermotor 16 sitzt, der wiederum auf der Außenseite des Lagerschilds 5 sitzt. Das genannte Lagerschild 5 weist hierbei Kühlluftaustritts- und -eintrittsöffnungen auf, so dass der Kühlluftstrom über die Außenseite des genannten Lagerschilds 5 zirkuliert werden kann. Auf der genannten Außenseite des Lagerschildes 5 sitzt hierzu eine napfförmige Gehäusekappe 30, durch die hindurch ein geschlossener Kühlluftkreislauf vorgesehen ist.

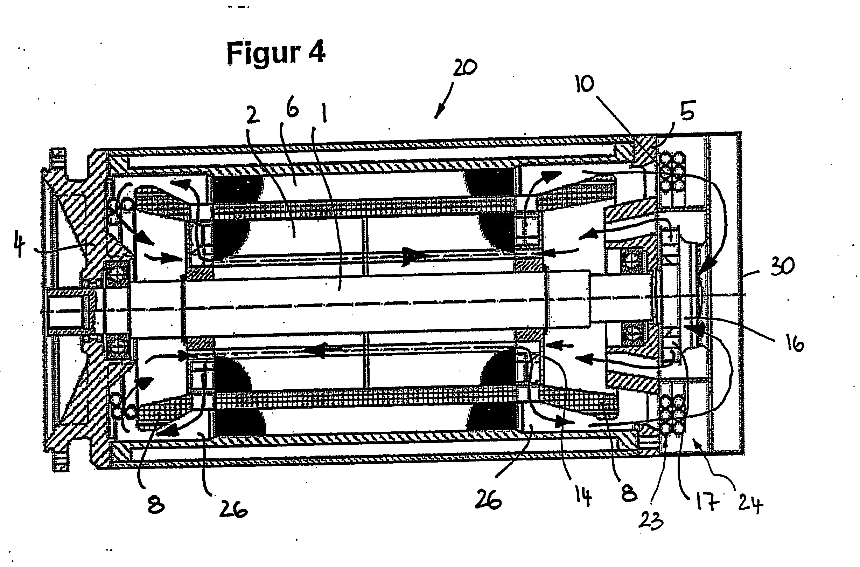

Fig. 4 zeigt eine weitere Ausführungsform der elektrischen Maschine 20, die einen prinzipiell ähnlichen Aufbau wie die Ausführung nach Fig. 3 besitzt. Im Unterschied hierzu ist bei der Ausführung nach Fig. 4 die auf der rechten Seite vorgesehene Kühlrohrschlange 10 auf der Außenseite des Lagerschildes 5 angeordnet, wo einerseits mehr Platz für die Kühlrohrschlange 10 ist und dementsprechend eine größere Kühlrohrschlange 10 vorgesehen werden kann, und andererseits eine noch effizientere Kühlung der Kühlluft erzielt werden kann.

Die elektrische Maschine 20 ist in vielfältiger Weise einsetzbar und verwendbar. Eine vorteilhafte Verwendung ist der Einsatz als Windenantrieb, wobei aufgrund der hocheffizienten Kühlung mit interner Luftumwälzung die Maschine vorteilhafterweise im Inneren der Seiltrommel angeordnet werden kann, ohne thermische Probleme zu verursachen. Die Einsatzmöglichkeiten der elektrischen Maschine sind jedoch nicht hierauf beschränkt.

## Patentansprüche

1. Elektrische Maschine mit einem Maschinengehäuse (21), in dem ein Rotor (2) mit einer welle (1) und ein Stator (6) mit einer Statorwicklung (7) aufgenommen sind, wobei die genannte Statorwicklung (7) auf gegenüberliegenden Seiten in jeweils einem Wickelkopfraum (26) angeordnete Wickelköpfe (8) aufweist, sowie mit einer Kühlvorrichtung (24), die einen Flüssigkühlkreis (23) mit einer Statormantelkühlung (9) und Kühlrohrschlangen (10), die außerhalb des Wickelkopfs (8) durch die Wickelkopfräume (26) geführt sind aufweist, **dadurch gekennzeichnet, dass** die Kühlvorrichtung (24) zumindest eine, vorzugsweise mit dem Rotor (2) verbundene, Luftkühlung (25) zur Luftumwälzung in den Wickelkopfräumen (26) aufweist, wobei die Luftkühlung (25) zwei jeweils einem Wickelkopfraum (26) zugeordnete Lüfterräder (11) zur Erzeugung eines innerhalb eines jeden Wickelkopfraums (26) zirkulierenden Luftstroms aufweist, der mittels Luftkanal- und/oder -leitmitteln (27) in dem jeweiligen Wickelkopfraum (26) über die freiliegenden Kühlrohrschlangen (10) und durch die Wickelköpfe (8) hindurch zirkulierend geführt ist, wobei die Wickelkopfräume (26) jeweils geschlossene Luftzirkulationsräume bilden und hinsichtlich der Kühlluftzirkulation voneinander getrennt ausgebildet sind, wobei die Luftkanal- und/oder - leitmittel (27) am Hals der Wickelköpfe (8) angeordnete, schlitzförmige Durchgangsausnehmungen (12) im jeweiligen Wickelkopf (8), die über den Umfang des Wickelkopfs (8) verteilt sind, und in Längsrichtung durch die Wickelköpfe (8) gehende Kühlluftausnehmungen (13) umfassen, die mit den genannten Durchgangsausnehmungen (12) am Hals der Wickelköpfe (8) in Verbindung stehen, wobei die sich ringförmig um die Achse der Welle mit einer Welle Kühlrohrschlangen (10) an den Stirnseiten der Wickelköpfe (8) in einem dort jeweils vorgesehenen Spalt zwischen den Stirnseiten der Wickelköpfe (8) und Lagerschilden (4, 5) angeordnet sind.

2. Elektrische Maschine nach dem vorhergehenden Anspruch, wobei die Luftkanal- und/oder -leitmittel (27) eine Vielzahl von ringförmig um die Wickelköpfe (8) führende Strömungswege definineren, die jeweils die genannten Durchgangsausnehmungen (12), einen Außenabschnitt zwischen dem jeweiligen Wickelkopf (8) und dem Maschinengehäuse (21), einen stirnseitigen Strömungswegabschnitt zwischen den Wickelkopfstirnseiten und den Lagerschildern (4, 5) sowie einen Innenabschnitt auf der Innenseite der Wickelköpfe (8) umfassen.

3. Elektrische Maschine nach einem der vorhergehenden Ansprüche, wobei die Kühlrohrschlangen (10) Wärmeübertragungsrippen aufweisen.

4. Elektrische Maschine nach einem der vorhergehenden Ansprüche, wobei die Lüfterräder (11) von unmittelbar auf dem Rotor (2) sitzenden Aufsatzscheiben (14) mit Lüfterteilen (17) und/oder an den Rotor (2) angeformten Lüfterteilen (17) gebildet sind, wobei die Aufsatzscheiben (14) in den Wickelköpfen (8) aufgenommen sind und radiale Ableitabschnitte besitzen, die in die Durchgangsausnehmungen (12) in den Wickelköpfen (8) münden.

5. Elektrische Maschine nach einem der vorhergehenden Ansprüche, wobei die Lüfterräder (11) innerhalb der Wickelköpfe (8) angeordnet und von den Rotorstirnseiten beabstandet sind.

6. Elektrische Maschine nach einem der vorhergehenden Ansprüche, wobei die Luftkühlung (25) eine auf einer Lagerschildaußenseite angeordnete Lüftereinheit vorzugsweise umfassend einen Lüftermotor (16) und ein Lüfterrad (17) aufweist, die mit dem Wickelkopfraum (26) auf der Lagerschildinnenseite durch Kühllufteintritts- und -austrittsöffnungen im Lagerschild (5) kommuniziert, wobei auf der Lagerschildaußenseite eine napffoïmige & Gehäuschappe (30) sitzt, durch die ein geschlossener Kühlluftkreis vorgesehen ist..

7. Elektrische Maschine nach dem vorhergehenden Anspruch, wobei die Kühlrohrschlangen (10) auf der Maschinenseite mit der genannten Lüftereinheit auf der Lagerschildaußenseite in einem Strömungsweg von/zu der genannten Lüftereinheit angeordnet sind.

8. Verwendung einer elektrischen Maschine nach einem der Ansprüche 1 bis 7 zum Antrieb einer Seilwinde von Hebezeugen wie Krane, Seilbagger und ähnlichen Baumaschinen, wobei die elektrische Maschine im Inneren einer Seiltrommel der Seilwinde angeordnet ist.

## Claims

1. Electric machine with a machine housing (21) in which a rotor (2) with a shaft (1) and a stator (6) with a stator winding (7) are accommodated, wherein the aforesaid stator winding (7) comprises winding overhangs (8) arranged on opposing sides in each case in a winding-overhang space (26), and also with a cooling device (24) which has a liquid cooling circuit (23) with stator casing cooling (9) and cooling pipe coils (10), which are guided outside the winding overhang (8) through the winding-overhang spaces (26), **characterised in that** the cooling device (24) comprises at least one air cooling means (25), preferably connected to the rotor (2), for circulating air in the winding-overhang spaces (26), wherein the air cooling means (25) has two fan impellers (11), associated with an overhang space (26) in each case, for generating an air stream which circulates within each winding-overhang space (26) and which is guided to circulate by means of air duct and/or air conduction means (27) in the respective overhang space (26) over the exposed cooling pipe coils (10) and through the winding overhangs (8), wherein the winding-overhang spaces (26) in each case form closed air circulation spaces and are formed separately from each other with regard to the cooling-air circulation, wherein the air duct and/or air conduction means (27) comprise slot-shaped through-holes (12) in the respective winding overhang (8), arranged on the neck of the winding overhangs (8), which are distributed over the periphery of the winding overhang (8), and cooling-air cutouts (13) passing in the longitudinal direction through the winding overhangs (8), which cutouts communicate with the aforesaid through-holes (12) on the neck of the winding overhangs (8), wherein the cooling pipe coils (10) which extend in annular manner around the axis of the shaft (1) are arranged on the end faces of the winding overhangs (8) in a gap provided there in each case between the end faces of the winding overhangs (8) and end shields (4, 5).

2. Electric machine according to the preceding claim, wherein the air duct and/or air conduction means (27) define a large number of flow paths extending in annular manner around the winding overhangs (8), which paths in each case comprise the aforesaid through-holes (12), an outer portion between the respective winding overhang (8) and the machine housing (21), an end-face flow path portion between the winding-overhang end faces and the end shields (4, 5), and also an inner portion on the inside of the winding overhangs (8).

3. Electric machine according to one of the preceding claims, wherein the cooling pipe coils (10) have heat transfer fins.

4. Electric machine according to one of the preceding claims, wherein the fan impellers (11) are formed by disc attachments (14), seated directly on the rotor (2), with fan parts (17), and/or fan parts (17) formed on the rotor (2), wherein the disc attachments (14) are accommodated in the winding overhangs (8) and have radial discharge portions which open into the through-holes (12) in the winding overhangs (8).

5. Electric machine according to one of the preceding claims, wherein the fan impellers (11) are arranged within the winding overhangs (8) and are spaced apart from the rotor end faces.

6. Electric machine according to one of the preceding claims, wherein the air cooling means (25) has a fan unit arranged on an outside of the end shield and preferably comprising a fan motor (16) and a fan impeller (17), which unit communicates with the winding-overhang space (26) on the inside of the end shield by cooling-air entry and exit openings in the end shield (5), wherein a cup-shaped housing cap (30) is seated on the outside of the end shield, through which cap a closed cooling-air circuit is provided.

7. Electric machine according to the preceding claim, wherein the cooling pipe coils (10) on the machine side with the aforesaid fan unit on the outside of the end shield are arranged in a flow path from/to the aforesaid fan unit.

8. Use of an electric machine according to one of Claims 1 to 7 for driving a cable winch of hoisting equipment such as cranes, cable excavators and similar construction machines, wherein the electric machine is arranged in the interior of a cable drum of the cable winch.

## Revendications

1. Machine électrique avec un boîtier de machine (21), dans lequel sont logés un rotor (2) avec un arbre (1) et un stator (6) avec un enroulement de stator (7), dans laquelle ledit enroulement de stator (7) présente sur des côtés se faisant face des têtes de bobine (8) disposées dans respectivement un espace de tête de bobine (26), ainsi qu'avec un dispositif de refroidissement (24), qui présente un circuit de refroidissement de liquide (23) avec un refroidissement d'enveloppe de stator (9) et des serpentins tubulaires de refroidissement (10), qui sont guidés à l'extérieur de la tête de bobine (8) à travers les espaces de tête de bobine (26), **caractérisée en ce que** le dispositif de refroidissement (24) présente au moins un refroidissement d'air (25) relié de préférence au rotor (2), servant à la circulation d'air dans les espaces de tête de bobine (26), dans laquelle le refroidissement d'air (25) présente deux hélices de ventilateur (11) associées respectivement à un espace de tête de bobine (26), servant à générer un flux d'air circulant à l'intérieur de chaque espace de tête de bobine (26), qui est guidé de manière à circuler au-dessus des serpentins tubulaires de refroidissement (10) dégagés et à travers les têtes de bobine (8) dans l'espace de tête de bobine (26) respectif au moyen de moyens de canal d'air et/ou de guidage d'air (27), dans laquelle les espaces de tête de bobine (26) forment des espaces de circulation d'air respectivement fermés et sont réalisés de manière séparée les uns des autres eu égard à la circulation d'air de refroidissement, dans laquelle les moyens de canal d'air et/ou de guidage d'air (27) comprennent des évidements de passage (12) en forme d'entaille disposés au niveau du col des têtes de bobine (8) dans la tête de bobine (8) respective, qui sont répartis sur la périphérie de la tête de bobine (8) et des évidements d'air de refroidissement (13) allant dans le sens longitudinal à travers les têtes de bobine (8), qui sont reliés auxdits évidements de passage (12) au niveau du col des têtes de bobine (8), dans laquelle les serpentins tubulaires de refroidissement (10) s'étendant tout autour de l'axe de l'arbre (1) de manière à présenter une forme annulaire sont disposés au niveau des côtés frontaux des têtes de bobine (8) dans une fente prévue respectivement à cet endroit entre les côtés frontaux des têtes de bobine (8) et des flasques (4, 5).

2. Machine électrique selon la revendication précédente, dans laquelle les moyens de canal d'air et/ou de guidage d'air (27) définissent une pluralité de trajets d'écoulement menant autour des têtes de bobine (8) de manière à présenter une forme annulaire, qui comprennent respectivement lesdits évidements de passage (12), une section extérieure entre la tête de bobine (8) respective et le boîtier de machine (21), une section de trajet d'écoulement côté frontal entre les côtés frontaux de tête de bobine et les flasques (4, 5) ainsi qu'une section intérieure sur le côté intérieur des têtes de bobine (8).

3. Machine électrique selon l'une quelconque des revendications précédentes, dans laquelle les serpentins tubulaires de refroidissement (10) présentent des nervures de transfert de chaleur.

4. Machine électrique selon l'une quelconque des revendications précédentes, dans laquelle les hélices de ventilateur (11) sont formées par des plaques de recouvrement (14) reposant directement sur le rotor (2), avec des parties de ventilateur (17) et/ou des parties de ventilateur (17) formées au niveau du rotor (2), dans laquelle les plaques de recouvrement (14) sont logées dans les têtes de bobine (8) et possèdent des sections de déviation radiales, qui débouchent dans les évidements de passage (12) dans les têtes d'enroulement (8).

5. Machine électrique selon l'une quelconque des revendications précédentes, dans laquelle les hélices de ventilateur (11) sont disposées à l'intérieur des têtes de bobine (8) et sont tenues à distance des côtés frontaux de rotor.

6. Machine électrique selon l'une quelconque des revendications précédentes, dans laquelle le refroidissement d'air (25) présente une unité formant ventilateur disposée sur un côté extérieur de flasque comprenant de préférence un moteur de ventilateur (16) et une hélice de ventilateur (17), qui communique avec l'espace de tête de bobine (26) sur le côté intérieur de flasque par des ouvertures d'entrée et de sortie d'air de refroidissement dans le flasque (5), dans laquelle un capot de boîtier (30) en forme de godet siège sur le côté extérieur de flasque, à travers lequel un circuit d'air de refroidissement fermé est prévu.

7. Machine électrique selon la revendication précédente, dans laquelle les serpentins tubulaires de refroidissement (10) sont disposés sur le côté de machine avec ladite unité formant ventilateur sur le côté extérieur de flasque sur un trajet d'écoulement depuis/vers ladite unité formant ventilateur.

8. Utilisation d'une machine électrique selon l'une quelconque des revendications 1 à 7 servant à entraîner un treuil d'engins de levage tels que des grues, des pelles à câbles et des machines de construction similaires, dans laquelle la machine électrique est disposée à l'intérieur d'un enrouleur de câble du treuil.
